# EUROPÄISCHE PATENTANMELDUNG

(11) **EP 1 217 705 A2**
(43) Veröffentlichungstag der Anmeldung: **26.06.2002**
(21) Anmeldenummer: 01128713.3
(22) Anmeldetag: 03.12.2001
(51) Int. Cl.: H02G 3/32

(54) **Vorrichtung zum Befestigen von Leitungsführungskanälen an Wänden**

(30) Priorität: 23.12.2000 DE 20021918 U
(71) Anmelder: Tehalit GmbH & Co. KG, D-67716 Heltersberg (DE)
(72) Erfinder: Szabo, Thomas, 66849 Landstuhl (DE); Kauf, Peter, 66482 Zweibrücken (DE); Klöckner, Oliver, 66976 Rodalben (DE); Hofmann, Armin, 86899 Landsberg am Lech (DE)
(74) Vertreter: Patentanwälte Möll und Bitterich

(57) **Zusammenfassung**

Um Leitungsführungskanäle mit Hilfe von Dübeln und Befestigungsschrauben an Wänden und dergleichen befestigen zu können, ist ein Wandhalter (20) vorgesehen mit wenigstens einer Öffnung für eine Befestigungsschraube oder einen Dübel und zwei parallelen Langschlitzen (24). Des weiteren sind im Boden (2) des Kanalunterteils Öffnungen (7, 7') in zwei parallelen Reihen angeordnet, als Langlöcher ausgeführt und sitzen gegenseitig auf Lücke. Die Langschlitze (24) sind quer zu den Langlöchern (7, 7') im Kanalboden (2) orientiert. An den Kreuzungspunkten der Langlöcher (7, 7') mit den Langschlitzen (24) eingesteckte Clipse (10) verbinden Kanalunterteil (1) und Wandhalter (20) form- und/oder kraftschlüssig. Zur endgültigen Fixierung sind die Clipse (10) mit Spreizschrauben (19) oder Spreiznieten ausgerüstet.

## Beschreibung

Die Erfindung betrifft Vorrichtungen zur Befestigung von Leitungsführungskanälen, insbesondere von Brüstungskanälen, mit Hilfe von Dübeln und Befestigungsschrauben an Wänden gemäß dem Oberbegriff des Anspruchs 1.

Leitungsführungskanäle werden seit vielen Jahrzehnten weltweit in sehr großen Stückzahlen eingesetzt. Ein großer Teil dieser Kanäle, die sogenannten Brüstungskanäle, werden an Gebäudewänden befestigt. Dabei ist auf exakte Positionierung der einzelnen Kanalabschnitte zu achten, damit der fertige Kanal nicht nur seine mechanischen Aufgaben erfüllt sondern auch ein optisch einwandfreies Bild bietet.

Die Befestigung der Kanalunterteile an der Wand erfolgt üblicherweise mit Hilfe von Dübeln und Schrauben. Nach der herkömmlichen Arbeitsweise hält der Installateur die Kanalabschnitte zunächst an die Wand, richtet sie mit der Wasserwaage aus, zeichnet die Dübellöcher an, legt den Kanalabschnitt auf den Boden, bohrt die Dübellöcher, steckt die Dübel ein, hält den Kanalabschnitt vor die Dübel und schraubt schließlich die Befestigungsschrauben in die Dübel. Diese Vorgehensweise ist umständlich und zeitaufwändig. Sie führt auch leicht dazu, dass die Dübel nicht an der richtigen Stelle sitzen, weil die Kanalabschnitte vor dem Bohren der Dübellöcher zur Seite gelegt werden müssen. Eine weitere Ursache ist, dass der Bohrer während des Bohrens verrutscht.

Es ist des weiteren bekannt, die Brüstungskanäle mit Hilfe von speziellen Konsolen zu montieren. Man vergleiche beispielsweise WO86/06887, DE-A 42 03 919 oder DE-U 92 14 200. Da beim Befestigen der Konsolen dieselben praktischen Probleme auftreten wie beim Befestigen der Kanäle selbst, sind die Konsolen mehrteilig ausgeführt. Durch in die verschiedenen Konsolenteile eingearbeitete Lang- und Rundlöcher, durch die Klemmschrauben gesteckt werden, kann der Installateur die endgültige Position des Kanals in allen drei Raumrichtungen fein justieren.

Die mehrteilige Ausführung dieser Konsolen hat eine aufwändige Produktion und Montage zur Folge. Auch verbleibt zwischen Kanal und Wand ein nicht unerheblicher Abstand. Zum Justieren der Kanäle in allen drei Raumachsen müssen die Klemmverbindungen der wenigstens zwei Konsolen, die einen Kanalabschnitt halten, gelöst werden. Ab diesem Moment muss der Installateur den Kanalabschnitt mit einer Hand festhalten. Nach dem Justieren muss er die Klemmverbindungen mit der anderen Hand wieder anziehen, was in der Praxis nicht ganz einfach ist, da die Kanalabschnitte typischerweise eine Länge von 2 m haben und die Konsolen entsprechend weit auseinander liegen. In der Praxis werden daher zwei Mann benötigt, um den Kanal zu montieren.

Der vorliegenden Erfindung liegt die Aufgabe zugrunde, eine Vorrichtung zur Befestigung von Leitungsführungskanälen, insbesondere Brüstungskanälen, an Gebäudewänden und dergleichen anzugeben, welche das problemlose Justieren der Kanalabschnitte in zwei Raumachsen durch nur einer Person ermöglicht und deren Platzbedarf verschwindend gering ist.

Diese Aufgabe wird gelöst durch eine Vorrichtung mit den Merkmalen des Anspruchs 1.

Der wesentliche Vorteil der erfindungsgemäßen Vorrichtung ist darin zu sehen, dass die Wandhalter zum Anschrauben an die Wand nur grob justiert werden müssen. Dadurch ist dieser Teil der Kanalmontage sehr schnell erledigt. Dank der Positionierung und Dimensionierung der sich kreuzenden Langlöcher im Kanalboden und Langschlitze im Wandhalter ergeben sich stets zwei übereinander liegende Kreuzungspunkte, an denen die Clipse durchgesteckt werden können, wodurch der Kanalabschnitt kraftschlüssig und teilweise auch formschlüssig an der Wandhalterung sitzt. Trotzdem lässt sich jeder Kanalabschnitt auch nachträglich noch in den zwei Raumachsen Höhe und Seite fein justieren. Dank der zwei übereinander liegenden Befestigungspunkte wirkt der Wandhalter gleichzeitig als Versteifung des Kanalbodens.

Es hat sich herausgestellt, dass es genügt, den Wandhalter mit einem einzigen Dübel und einer einzigen Befestigungsschraube an der Wand zu befestigen. Die so erreichte Tragkraft reicht völlig aus. Die nach der derzeitigen Praxis übliche Verwendung von jeweils zwei Dübel-Schrauben-Einheiten übereinander und die daraus resultierende Notwendigkeit, zwei Dübellöcher zu bohren, entfällt. Dadurch wird die Montage zusätzlich beschleunigt.

Gemäß einer bevorzugten Ausgestaltung der Erfindung besitzt der Clips, der vorzugsweise aus Kunststoff gespritzt ist, einen Kopf, wenigstens zwei federnde Füße und wenigstens eine Bohrung zum Einführen eines die Füße spreizenden Spreizelementes, beispielsweise eines Spreizstiftes oder einer Spreizschraube. Mit Hilfe dieses Spreizelements wird das Kanalelement nach dem Justieren endgültig fixiert.

Vorteilhafterweise ist der gegenseitige Abstand zweier Langlöcher im Kanalboden kleiner als der gegenseitige Abstand der beiden Langschlitze im Wandhalter. Diese Maßnahme hat die Aufgabe sicherzustellen, dass die Kreuzungspunkte zum Einstecken der Clipse optimal positioniert sind.

Vorteilhafterweise ist der Wandhalter hutförmig gekröpft. Dadurch sitzt der Kopf der Wandbefestigungsschraube vertieft und kann die Position des Kanalelementes nicht stören; die Füße der Clipse können sich auf der Rückseite der Wandhalter frei aufspreizen.

Wie schon erwähnt, kann der Wandhalter aus Blech gebogen oder aus Kunststoff gespritzt sein. Besteht der Wandhalter aus Kunststoff, so besteht die Möglichkeit, den Wandhalter und die beiden Clipse einstückig aus Kunststoff zu spritzen. Der Installateur kann jetzt die Clipse nicht mehr verlieren. Eine Schwachstelle zwischen Wandhalter und Clips erleichtert das Abtrennen derselben.

Anhand der Zeichnung soll die Erfindung in Form von Ausführungsbeispielen näher erläutert werden. Es zeigen
- Fig. 1: eine perspektivische Darstellung eines Kanalelements, befestigt an einer Wand,
- Fig. 2: eine perspektivische Ansicht eines Clipses zur Befestigung des Kanalelements,
- Fig. 3: eine perspektivische Darstellung eines aus Blech gebogenen Wandhalters und
- Fig. 4: eine perspektivische Darstellung eines aus Kunststoff einstückig mit zwei Clipsen gespritzten Wandhalters.

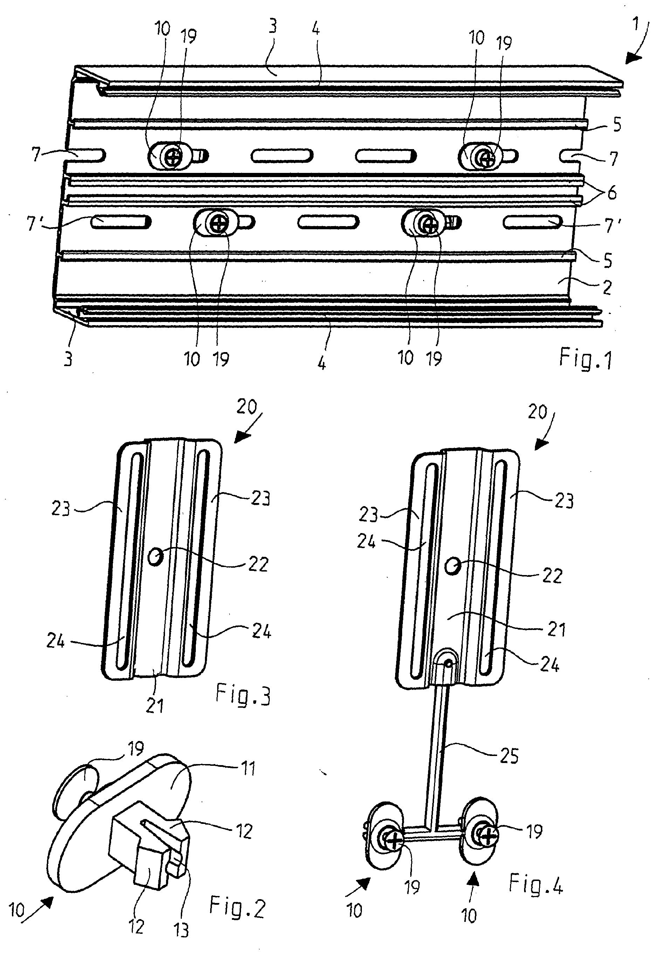

Fig. 1 zeigt in perspektivischer Darstellung einen Abschnitt eines Unterteils 1 eines Brüstungskanals. Das Kanalunterteil 1 hat einen U-förmigen Querschnitt mit einem Boden 2, zwei sich senkrecht vom Boden erhebenden Seitenwänden 2 und je einem Deckelhalteprofil 4 an den freien Kanten der Seitenwände 3. Halteleisten 5, 6 an der Innenseite des Kanalbodens 2 dienen der Befestigung von Trennwänden, Installationsgeräten und dergleichen.

Im Kanalboden 2 erkennt man des weiteren zwei parallele, gegenseitig beabstandete Reihen von Langlöchern 7, 7'. Diese dienen zur Befestigung des Kanalunterteils 1 an Wandhaltern 20, 20' (Fig. 3 und 4) mit Hilfe von Clipsen 10 (Fig. 2) und Spreizschrauben 19.

Fig. 2 zeigt perspektivisch einen Blick auf die Unterseite eines Clipses 10. Dieser besitzt einen länglichen Kopf 11. Auf der Unterseite des Kopfes 11 erkennt man Spreizfüße 12. In deren Zentrum befindet sich eine Öffnung 13, durch die ein Spreizelement, beispielsweise die Spreizschraube 19 oder ein Spreizstift, eingeführt werden kann.

Fig. 3 zeigt in perspektivischer Darstellung einen aus Blech gebogenen Wandhalter 20 mit hutförmigem Querschnitt. Das an der Wand anliegende Halterteil 21 besitzt eine Bohrung 22 für die Wandbefestigung mittels Dübel und Befestigungsschraube (nicht dargestellt). Die seitlichen Flügel 23 des Wandhalters 20 sind von der Wand beabstandet. Außerdem enthalten sie je einen Langschlitz 24.

Für die Kanalmontage schraubt der Installateur zunächst die Wandhalter 20 grob positioniert mit nur einer Schraube an der Wand fest. Anschließend hält er das Kanalunterteil 1 vor die Wandhalter. Dank der Dimensionierung und Positionierung der Langschlitze 24 und der Langlöcher 7, 7' gibt es jeweils zwei Kreuzungspunkte, durch die je ein Clips 10 gesteckt wird. Aufgrund der federnden Füße 12 ist das Kanalunterteil 1 kraftschlüssig und teilweise auch formschlüssig am Wandhalter 20 befestigt. Der Installateur kann anschließend das Kanalunterteil 1 ohne Hilfsperson bequem justieren. Sobald dies geschehen ist, schraubt er die Spreizschraube 19 fest und das Kanalelement 1 ist fixiert.

Fig. 4 zeigt einen aus Kunststoff gespritzten Wandhalter 20'. An diesem sind über einen Steg 25 zwei Clipse 10 angespritzt. Sobald der Wandhalter 20' mittels Dübel und Befestigungsschraube an der Wand befestigt ist, trennt der Installateur den Steg 25 und die Clipse 10 ab. Auf diese Weise kann er die Clipse 10 nicht verlieren.

## Patentansprüche

1. Vorrichtung zum Befestigen von Leitungsführungskanälen, insbesondere von Brüstungskanälen, mit Hilfe von Dübeln und Befestigungsschrauben an Wänden und dergleichen, im wesentlichen umfassend
- ein Kanalunterteil (1) mit
- einem Boden (2),
- Seitenwänden (3),
- Deckelhalteprofilen (4) an den Seitenwänden (3)
- und Befestigungsöffnungen (7, 7') im Boden (2)
- und wenigstens einen Wandhalter (20, 20') mit
- wenigstens einer Öffnung (22) für eine Befestigungsschraube oder einen Dübel
- und wenigstens einem Langschlitz (24), welcher mit den Öffnungen (7, 7') im Boden (2) kooperiert,
**gekennzeichnet durch** die Merkmale:
- die Öffnungen (7, 7') im Kanalboden (2) sind
- in zwei parallelen Reihen angeordnet,
- als Langlöcher ausgeführt
- und sitzen gegenseitig auf Lücke,
- der Wandhalter (20, 20') besitzt zwei parallele Langschlitze (24), die quer zu den Langlöchern (7, 7') im Kanalboden (2) orientiert sind,
- an den Kreuzungspunkten der Langlöcher (7, 7') mit den Langschlitzen (24) eingesteckte Clipse (10) verbinden Kanalunterteil (1) und Wandhalter (20, 20') form- und/oder kraftschlüssig.

2. Vorrichtung nach Anspruch 1, **gekennzeichnet durch** die Merkmale:
- der Clips (10) besitzt
- einen Kopf (11),
- wenigstens zwei federnde Füße (12)
- und eine Bohrung (13) zum Einführen eines die Füße (12) spreizenden Spreizelements in Form eines Stiftes oder einer Schraube (19).

3. Vorrichtung nach Anspruch 1 oder 2, **gekennzeichnet durch** das Merkmal:
- der gegenseitige Abstand zweier Langlöcher (7, 7') im Kanalboden (2) ist kleiner als der gegenseitige Abstand der beiden Langschlitze (24) im Wandhalter (20, 20').

4. Vorrichtung nach einem der Ansprüche 1 bis 3, **gekennzeichnet durch** das Merkmal:
- der Wandhalter (20, 20') ist hutförmig gekröpft.

5. Vorrichtung nach einem der Ansprüche 1 bis 4, **gekennzeichnet durch** das Merkmal:
- der Wandhalter (20) besteht aus Blech.

6. Vorrichtung nach einem der Ansprüche 1 bis 4, **gekennzeichnet durch** das Merkmal:
- der Clips (10) besteht aus Kunststoff.

7. Vorrichtung nach einem der Ansprüche 1 bis 5, **gekennzeichnet durch** das Merkmal:
- der Wandhalter (20') besteht aus Kunststoff.

8. Vorrichtung nach Anspruch 6 und 7, **gekennzeichnet durch** das Merkmal:
- ein Wandhalter (20) und zwei Clipse (10) sind einstückig aus Kunststoff gespritzt.
